**Europäisches Patentamt**

(19) **European Patent Office**

**Office européen des brevets**

(11) Veröffentlichungsnummer: **0 060 482**
**B1**

# (12) EUROPÄISCHE PATENTSCHRIFT

(45) Veröffentlichungstag der Patentschrift:
18.07.84

(51) Int. Cl.³: **B 29 C 27/02**

(21) Anmeldenummer: **82101822.3**

(22) Anmeldetag: **08.03.82**

(54) **Schweissgerät zum Schweissen von dickwandigen Teilen aus thermoplastischem Kunststoff.**

(30) Priorität: **18.03.81 DE 3110443**

(43) Veröffentlichungstag der Anmeldung:
**22.09.82 Patentblatt 82/38**

(45) Bekanntmachung des Hinweises auf die Patenterteilung:
**18.07.84 Patentblatt 84/29**

(84) Benannte Vertragsstaaten:
**AT BE CH FR LI NL SE**

(56) Entgegenhaltungen:
**DE - A - 1 778 807**
**DE - A - 1 939 571**
**DE - A - 2 013 333**
**DE - A - 2 116 510**
**FR - A - 1 092 029**
**FR - A - 1 574 558**
**FR - A - 2 137 566**
**US - A - 2 722 964**

(73) Patentinhaber: **MESSER GRIESHEIM GMBH, Hanauer Landstrasse 330, D-6000 Frankfurt/Main 1 (DE)**

(72) Erfinder: **Bemelmann, Karl, Kronbergerstrasse 19, D-6232 Bad Soden (DE)**
Erfinder: **Jung, Klaus-Peter, Walter Kollo Strasse 69, D-6232 Bad Soden (DE)**
Erfinder: **Lenck, Siegfried, Dürkheimerstrasse 37, D-6230 Frankfurt/M. 80 (DE)**

## Beschreibung

Die Erfindung betrifft ein Schweißgerät zum Schweißen von dickwandigen Teilen aus thermoplastischem Kunststoff gemäß dem Oberbegriff des Anspruchs 1.

Zur einwandfreien Verbindung dickwandiger Kunststoffteile durch Schweißen ist es notwendig, daß die vorbereitete Nahtstelle, — Kante, Fuge oder Nut — in richtiger Weise erwärmt wird.

Aus der FR-A-1 574 558 ist ein Schweißgerät bekannt, bei dem in Schweißrichtung gesehen vor dem Mundstück mit einer Düse für das Extrudat ein mittig über der Schweißfuge angeordnetes Rohr zum Einblasen von Warmgas in die Schweißfuge angeordnet ist.

Das aus dem Rohr in normaler Richtung mittig auf die Nahtwurzel austretende Warmgas erwärmt dadurch die Kanten, die Wurzel und die Flanken der vorbereiteten Schweißfuge sehr ungleichmäßig; im allgemeinen werden die oben liegenden Kanten stark und die tiefliegende Wurzel zu wenig erwärmt. Der Warmgasverbrauch ist wegen seiner ungerichteten Einbringung in die Schweißfuge relativ hoch. Das bedingt ein entsprechend großes Heizgerät und erhöhten Energieverbrauch.

Aufgabe der Erfindung ist es, die Warmluftverteilung in der Schweißfuge zur optimalen Erwärmung der zu verschweißenden Flächen zu verbessern. Außerdem soll die Warmluftmenge verringert werden.

Diese Aufgabe wird erfindungsgemäß bei dem Schweißgerät der eingangs genannten Gattung mit den Merkmalen des kennzeichnenden Teils des Hauptanspruchs gelöst.

Weiterbildungen der Erfindung sind in den Unteransprüchen angegeben.

Die Erfindung ermöglicht es, mit geringem technischen Aufwand und sparsamem Warmluftverbrauch eine optimale Schweißfugenvorbereitung zu erzielen.

Die Erfindung wird nachstehend anhand einiger Ausführungsbeispiele, die in der Zeichnung dargestellt sind, näher beschrieben. Es zeigt in schematischer Darstellung, teilweise im Schnitt

Fig. 1 in Vorderansicht eine Doppeldüse vor der Austrittsöffnung einer Warmgasführung mit zwei parallel zu den Fugenflanken gerichteten Blasdüsen vor einem Mundstück;

Fig. 2 die Vorrichtung nach Fig. 1 in Seitenansicht;

Fig. 3 die »schmetterlingsförmige« Warmgasverteilung in einer Schweißfuge bei einer Vorrichtung nach Fig. 1, 2;

Fig. 4 in Vorderansicht ein Mundstück mit integriertem Warmgasanschluß und Blasdüsen;

Fig. 5 ein Mundstück nach Fig. 3 in Seitenansicht.

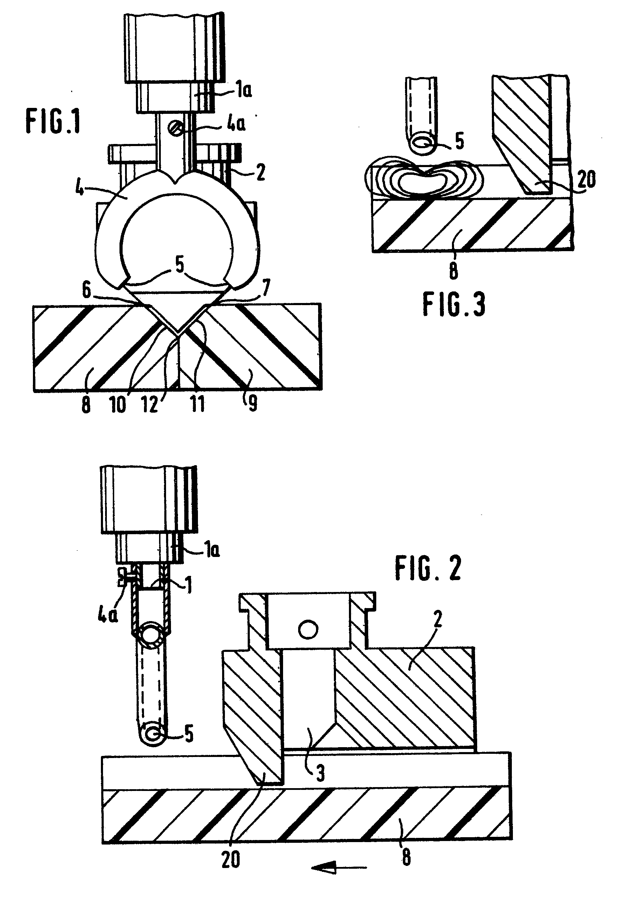

In den Fig. 1 und 2 ist mit 1 das Ende einer rohrförmigen Warmgasführung 1a bezeichnet, die in geringem Abstand vor dem Mundstück 2 mit der Öffnung 3 für das Extrudat angeordnet ist. Die Warmgasführung 1a ist in bekannter Weise an eine nicht gezeigte Heizvorrichtung, das Mundstück 2 auswechselbar an ein ebenfalls nicht gezeigtes Schweißgerät angeschlossen. Ein Düsenrohr 4 ist auf das Ende der Warmgasführung 1a aufgesteckt und mit bekannten Mitteln, beispielsweise einer Schraube, vorzugsweise lösbar befestigt. Zwei Blasdüsen 5 an den Enden des Düsenrohres 4 sind so gerichtet, daß die austretenden Warmgasstrahlen die Kanten 6 und 7 einer vorbereiteten Schweißfuge an zwei zu verschweißenden Kunststoffplatten 8 und 9 streifen, parallel zu den Flanken 10 und 11 strömen und in der Fugenwurzel 12 zusammentreffen. In der Fugenwurzel 12 breitet sich das Warmgas vorzugsweise in Längsrichtung aus. Fig. 3 zeigt die günstige Wärmeverteilung in der Schweißfuge.

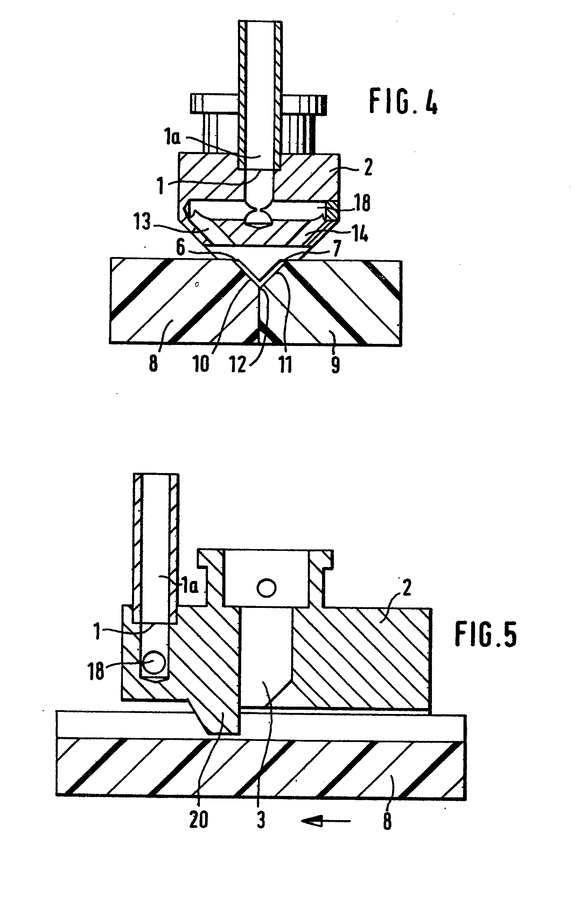

In den Fig. 4 und 5 ist eine Warmgasführung 1a dargestellt, die in das Mundstück 2 mit der Öffnung 3 für das Extrudat integriert ist. Innerhalb des Mundstückes 2 ist am Ende der Warmgasführung 1a ein Querkanal 18 vorgesehen, von dem 2 parallel zu den Flanken 10 und 11 der vorbereiteten Schweißfuge gerichtete Kanäle 13 und 14 abgehen. Die aus den düsenartigen Austrittsöffnungen der Kanäle 13 und 14 austretenden Warmgasstrahlen erfassen wiederum die Kanten 6 und 7 der vorbereiteten Schweißfuge, strömen parallel zu den Flanken 10 und 11 und treffen in der Fugenwurzel 12 zusammen. In der Fugenwurzel 12 breitet sich das Warmgas wieder vorzugsweise vor allem in Längsrichtung aus.

Ein Mundstück 2 nach Fig. 5 eignet sich besonders zum Verschweißen von Kunststoffen, die zu ihrer Plastifizierung einen erhöhten Wärmebedarf haben. Durch die hintereinanderliegenden Düsen kann die vorbereitete Schweißfuge gut aufgeheizt werden. Durch die zusätzliche Erwärmung des Extrudats mittels des durch einen Ringkanal geführten Warmgasstromes ist sichergestellt, daß das Extrudat genügend plastisch in die Schweißfuge eingebracht wird.

Das Mundstück 2 ist im allgemeinen in seinem unteren Bereich entsprechend der zu bildenden Schweißnaht geformt und weist unter anderen eine Nase 20 auf, welche dem Querschnitt der Schweißfuge entspricht. Bei einmal auf die zu verarbeitenden Kunststoffe abgestimmter Anzahl, den Querschnitten und Richtungen der Blasdüsen 13, 14 wird mit der Wahl des Mundstückes 2 gleichzeitig sichergestellt, daß die eingebrachte Warmgasmenge den Erfordernissen entspricht. Dabei bedarf es keinerlei Einstellungsarbeiten am Schweißgerät selbst. Durch die Anordnung der Warmgasblasdüsen 13, 14 im Mundstück 2 selbst ist ein gleichbleibender Abstand in bezug auf das Extrudat gewährleistet. Eine unbeabsichtigte Verstellung mit der nachteiligen Folge, daß die Schweißfuge wieder abkühlt, bevor das Extrudat eingebracht ist, ist somit nicht möglich. Besonders vorteilhaft wirkt sich die Kupplung der Warmgasblasdüsen 13, 14 mit dem Mundstück 2 nach maschinell geführten Schweißgeräten aus. Da die Wärmeeinbringung entsprechend dem gewählten Mundstück 2 gleichbleibt, kann ein einmal eingestelltes Programm mit gleichbleibenden Schweißergebnissen jederzeit wiederholt werden.

## Patentansprüche

1. Schweißgerät zum Schweißen von dickwandigen Teilen aus thermoplastischem Kunststoff, mit Einrichtungen einerseits zum Vorwärmen der Schweißfuge durch aus einer Austrittsöffnung (1) strömendes Warmgas und andererseits aus einem Extrudermundstück (2), aus dem das Extrudat in die Schweißfuge eingebracht wird, dadurch gekennzeichnet,
daß vor der Austrittsöffnung (1) eine Doppeldüse (4) vorzugsweise auswechselbar angeordnet ist, deren Blasöffnungen (5) in einer Ebene liegen und rechtwinklig zur Längsachse der Schweißfuge so ausgerichtet sind, daß das Warmgas die Kanten (6, 7) der Schweißfuge streifend parallel zu den Nahtflanken (10, 11) austritt.

2. Schweißgerät nach Anspruch 1, dadurch gekennzeichnet, daß die Austrittsöffnung (1) und die Blasdüsen (13, 14) bildende Doppeldüse (4) in dem Mundstück (2) angeordnet sind.

3. Schweißgerät nach Anspruch 2, dadurch gekennzeichnet, daß in dem Mundstück (2) mehrere Reihen Blasdüsen (13, 14) angeordnet sind.

4. Schweißgerät nach Anspruch 1, 2 und/oder 3, dadurch gekennzeichnet, daß mindestens ein Ringkanal um die Austrittsöffnung (3) für das Extrudat in dem Mundstück (2) vorgesehen ist, der mit der Warmgasführung (1a) in Verbindung steht.

## Claims

1. Welding-tool for thick-walled thermoplastic pieces, with a device for preheating the welding groove by means of warm gas flowing from a exit opening (1) and a mouthpiece (2) of a extruder from which the extruded material is introduced into the welding groove, characterized in that a double nozzle (4) is located in front of said exit opening (1) preferentially detachable located for exchangeability and the blower openings (5) of said double nozzle (4) being located in one plane perpendicularly to the longitudinal axis of the welding groove, and the warm gas exiting in a direction parallel to that of the groove sides and sides wiping the edges (6, 7) of the seam sides (10, 11).

2. Welding-tool according to claim 1, characterized in that the exit opening (1) and the double nozzle (4) formed by the blower nozzles (13, 14) are located inside the mouthpiece (2).

3. Welding-tool according to claim 2, characterized in that several rows of blower nozzles (13, 14) are located inside the mouthpiece (2).

4. Welding-tool according to one of the claims 1, 2 and/or 3, characterized in that at least one annular channel is provided around the exit opening (3) for the extruded material in said mouthpiece, and said channel is connected with said warm gas conduit (1a).

## Revendications

1. Appareil de soudage pour souder des pièces à parois epaisses en matière thermoplastique, avec des dispositifs, d'une part pour préchauffer le joint de soudure par un gaz chaud s'écoulant d'un orifice de sortie (1) et, d'autre part, constitués par une sortie de filière d'extrudeuse (2), à partir de laquelle le produit extrudé est déposé sur le joint de soudure, appareil caractérisé en ce que, en amont de l'orifice de sortie (1) est disposée une buse double (4) de préférence interchangeable, dont les orifices de soufflage (5) se situent dans un plan et sont orientés perpendiculairement à l'axe longitudinal du joint de soudure, de sorte que le gaz chaud sort paralèlement aux flancs (10, 11) de la soudure en rasant les bords (6, 7) du joint de soudure.

2. Appareil de soudage selon la revendication 1, caractérisé en ce que l'orifice de sortie (1) et la buse double (4) constituant les buses de soufflage (13, 14) sont disposés dans la sortie (2) de la filière.

3. Appareil de soudage selon la revendication 2, caractérisé en ce que dans la sortie (2) de la filière, sont disposées plusieurs rangées de buses de soufflage (13, 14).

4. Appareil de soudage selon les revendications 1 ou 2, et/ou 3 caractérisé en ce qu'au moins un canal annulaire est prévu autour de l'orifice de sortie (3) pour le produit extrudé dans la sortie (2) de filière, ce canal ètant en communication avec l'arrivée de gaz chaud (1a).

**FIG.1**

**FIG.3**

**FIG. 2**

FIG. 4

FIG. 5